# EUROPEAN PATENT SPECIFICATION

(11) **EP 1 564 248 B1**
(45) Date of publication and mention of the grant of the patent: **15.08.2007**
(21) Application number: 02781786.5
(22) Date of filing: 15.11.2002
(51) Int. Cl.: C08L 51/06, C08L 23/00, C08K 5/20, C08K 5/06, C08L 23/08

(54) **GRAFT COPOLYMER COMPOSITION, THERMOPLASTIC RESIN COMPOSITION CONTAINING THE SAME, AND MOLDED OBJECT**
PFROPFCOPOLYMERZUSAMMENSETZUNG, DIESE ENTHALTENDE THERMOPLASTISCHE HARZZUSAMMENSETZUNG UND FORMKöRPER
COMPOSITION DE POLYMERE GREFFE, COMPOSITION DE RESINE THERMOPLASTIQUE RENFERMANT CETTE COMPOSITION, ET OBJET MOULE

(43) Date of publication of application: 17.08.2005
(73) Proprietor: NOF CORPORATION, Tokyo 150-0013 (JP)
(72) Inventor: SUGIURA, Motoyuki, Anjo-shi, Aichi 446-0051 (JP); UCHIDA, Hitoshi, Okazaki-shi, Aichi 444-0834 (JP); TAKAMURA, Masumi, Handa-shi, Aichi 475-0833 (JP); YAMADA, Michihisa, Tokai-shi, Aichi 477-0032 (JP)
(74) Representative: Behnisch, Werner
(86) International application number: PCT/JP2002/011934
(87) International publication number: WO 2004/046242

(56) References cited:
- JP-A- 10 007 874
- JP-A- 11 209 541
- JP-A- 2000 044 766
- JP-A- 2000 234 004
- JP-A- 2000 281 730
- JP-A- 2001 011 141

## Description

### TECHNICAL FIELD

The present invention relates to a graft copolymer composition capable of being easily molded into a molded product that maintains a satisfactory appearance over a long period of time and that is resistant to abrasion, scratching and bending. The present invention also relates to a thermoplastic resin composition that contains the same, and to a molded product thereof.

### BACKGROUND ART

Thermoplastic resins, and particularly olefinic resins, have come to be used in recent years due to their light weight, ease of recycling, superior cost performance and lack of generation of toxic gases.

However, molded products made from an olefinic resin, such as polypropylene, polyethylene and olefin elastomer, have the shortcomings of being susceptible to scratching and abrasion as compared with vinyl chloride resin molded products, and thus there is a desire to improve on these shortcomings.

For example, in the case of using a thermoplastic olefin elastomer for the material of the glass run channel for automobile door glass, a Nylon film is adhered with adhesive to the surface of the glass run channel. As a result, the resistance of the glass run channel is reduced resulting in smoother raising and lowering of the door glass. However, the Nylon film has the shortcoming of not being strongly adhered to the thermoplastic olefin elastomer and becoming separated particularly under high temperature and high humidity atmosphere or under an atmosphere exposed to solvent atomization.

A glass run channel has been proposed that is obtained by adding organosiloxane and higher fatty acid amide to olefin elastomer (refer to pages 2 to 3 of Japanese Laid-Open Patent Publication No. 2000-26668). The glass run channel does not require a film coating the surface. Therefore, the problem of film separation is solved. However, the higher fatty acid amide vaporizes under atmosphere with high temperature and high humidity, and thus the glass is fogged. This defaces the appearance of the vehicle. This is due to the higher fatty acid amide being present in excess on the surface of said film in order to maintain smooth slidability of the glass run channel over a long period of time, thus resulting in a state in which the higher fatty acid amide vaporizes easily.

A door glass weather seal has been proposed that improves abrasion resistance by adding a fine particulate powder and alkyl-modified organosiloxane to an olefin elastomer (refer to page 3 of Japanese Laid-Open Patent Publication No. 2000-327848). However, it is necessary to add large amounts of the fine particulate powder and alkyl-modified organosiloxane in order to obtain practical effects. In addition, there was also the problem of a molded member whitening when bent due to the low degree of compatibility between the olefin elastomer and additives.

A polypropylene resin composition has been proposed that has improved abrasion resistance by adding a specific nucleating agent and a lubricant to a polypropylene resin (refer to pages 2 to 3 of Japanese Laid-Open Patent Publication No. 10-53673). However, this composition had the problem of the effects of the lubricant not being maintained over a long period of time due to the crystallinity of polypropylene.

Olefin resin molded products having complex shapes have come to be manufactured in recent years. In addition, molding processes are being required to be shorter in consideration of costs. Consequently, there is a need for a material having satisfactory fluidity and superior moldability that enables molding pressure losses to be decreased.

In order to satisfy such requirements, the applicants of the present invention previously proposed a thermoplastic resin and a thermoplastic resin composition containing a graft copolymer and a lubricant having a multiphase structure (refer to pages 1 and 7 of Japanese Laid-Open Patent Publication No. 2001-181472). However, in use of this thermoplastic resin composition, due to the low polarity of the lubricant and because interaction between the lubricant and graft copolymer was not taken into consideration, there were cases in which excess amount of the lubricant migrated to the surface of the molded product and cases in which the lubricant had difficulty in migrating to the surface of the molded product. Due to low compatibility between the lubricant and the graft copolymer, molded products made from the thermoplastic resin composition had the problems of low scratching resistance, abrasion resistance, moldability and bending resistance. The appearances of the molded products were easily defaced.

### DISCLOSURE OF THE INVENTION

The object of the present invention is to provide a graft copolymer composition capable of being easily molded into a molded product that maintains a satisfactory appearance over a long period of time, is resistant to abrasion, resistant to scratching and resistant to bending, a thermoplastic resin composition in which it is contained, and a molded product thereof.

In order to achieve the aforementioned object, the present invention provides a graft copolymer composition containing a graft copolymer as its main component and a lubricant. The lubricant is at least one of fatty acid amides and an alkylene oxide derivative. The graft copolymer has a multiphase structure in which particles of a first polymer segment are dispersed in a second polymer segment, and the diameter of the particles is 0.001 to 10 µm. The first polymer segment is one of an olefin polymer segment (a) and a vinyl polymer segment (b), while the second polymer segment is the other one of the olefin polymer segment (a) and the vinyl polymer segment (b). The vinyl polymer segment (b) is formed from at least one of vinyl monomer selected from the group consisting of (meth)acrylic acid, (meth)acrylic alkyl ester, glycidyl (meth)acrylate and hydroxyl group-containing vinyl monomers.

The present invention provides a thermoplastic resin composition containing an olefin thermoplastic resin as the main components and a graft copolymer composition. The graft copolymer composition contains a lubricant including at least one of fatty acid amides and an alkylene oxide derivative, and a graft copolymer as the main component, having a multiphase structure in which particles of a first polymer segment are dispersed in a second polymer segment, with the diameter of the particles being 0.001 to 10 µm. The first polymer segment is one of an olefin polymer segment (a) and a vinyl polymer segment (b), while the second polymer segment is the other one of the olefin polymer segment (a) and the vinyl polymer segment (b). The vinyl polymer segment (b) is formed from at least one of vinyl monomer selected from the group consisting of (meth)acrylic acid, (meth)acrylic alkyl ester, glycidyl (meth)acrylate and hydroxyl group-containing vinyl monomers.

The present invention further provides a molded product made from the aforementioned graft copolymer composition or the thermoplastic resin composition.

The present invention further provides a process for producing a graft copolymer composition. The process includes suspending an olefin polymer in water to prepare a suspension containing particles of the olefin polymer. A solution containing a vinyl monomer, a radical polymerizable organic peroxide and a radical polymerization initiator is added to the suspension. The vinyl monomer, the radical polymerizable organic peroxide and the radical polymerization initiator are immersed in particles of the olefin polymer. A precursor is synthesized by copolymerizing the vinyl monomer and the radical polymerizable organic peroxide in the particles of the olefin polymer. The precursor is mixed while melting.

### BEST MODE FOR CARRYING OUT THE INVENTION

Detailed explanation of the present invention follows.

A graft copolymer composition according to the present invention contains a graft copolymer as the main component and a lubricant. Surface migration of the lubricant is controlled by adjusting the interaction or the balance between the affinity and counter-affinity of the graft copolymer and the lubricant. Adjustment of the surface migration may be referred to as release control.

The graft copolymer has an olefin polymer segment (a) and a vinyl polymer segment (b). One of the segments is particles having a diameter of 0.001 to 10 µm and being dispersed in the other segment. Thus, the graft copolymer has a multiphase structure with a particle-dispersion phase.

Examples of said olefin polymers serving as the raw material resin of the olefin polymer segment (a) include polypropylene, polyethylene, and copolymers of ethylene and α-olefins having 3 or more carbon atoms, copolymers of α-olefin monomers and vinyl monomers, and rubbers such as ethylene copolymer rubber, diene rubber or polyisobutylene rubber. These can be used alone or in combination of two or more of the different kinds.

Examples of said α-olefins having 3 or more carbon atoms include propylene, 1-butene, 1-pentene, 3-methyl-1-butene, 1-hexene, 1-decene, 3-methyl-1-pentene, 4-methyl-1-pentene, 1-octene and their mixtures.

Examples of said ethylene copolymer rubber include ethylene-propylene copolymer rubber, ethylene-propylene-diene copolymer rubber and ethylene-octene copolymer rubber.

Limiting viscosity number [η] (as measured in decalin at 135°C) of the olefin polymer, which is the raw material of the olefin polymer segment (a), is preferably within the range of 0.1 to 40 dl/g, and more preferably within the range of 0.2 to 32 dl/g, in consideration of productivity.

The vinyl monomer used for forming the vinyl monomer segment (b) includes at least one of monomer selected from the group consisting of (meth)acrylic acid, (meth)acrylic alkyl ester, glycidyl (meth)acrylate and hydroxyl group-containing vinyl monomers. These monomers have relatively high polarity. Consequently, graft copolymers formed from these vinyl monomers have high affinity with solvent since they have relatively high polarity. Thus, interaction between the graft copolymer and the lubricant is relatively strong.

The present specification uses the term "(meth)acryl" as the generic term of acryl and methacryl.

Examples of said (meth)acrylic alkyl ester include acrylic esters formed from acrylic acid and alkyl alcohols having 1 to 20 carbon atoms (e.g., methyl acrylate and ethyl acrylate), and methacrylic esters formed from methacrylic acid and alkyl alcohols having 1 to 20 carbon atoms (e.g., methyl methacrylate and ethyl methacrylate). Examples of said hydroxyl group-containing vinyl monomers include 3-hydroxy-1-propene, 4-hydroxy-1-butene, cis-1,4-dihydroxy-2-butene, 2-hydroxyethyl methacrylate, 2-hydroxypropyl acrylate, 3-hydroxypropyl methacrylate and 2-hydroxyethyl crotonate. Among these, butyl acrylate, methacrylic acid, glycidyl methacrylate and 2-hydroxypropyl methacrylate are preferable in consideration of their strong interaction with the lubricant and the ease of adjusting surface migration of the lubricant.

A preferable example of the vinyl monomer used for forming the vinyl polymer segment (b) contains the aforementioned monomer having relatively high polarity and a non-polar vinyl monomer or vinyl monomer having relatively low polarity. The combined use of a monomer having relatively high polarity with a non-polar vinyl monomer or vinyl monomer having relatively low polarity makes it possible to adjust the surface migration of the lubricant by adjusting the balance between affinity and counter-affinity.

Specific examples of non-polar vinyl monomers or vinyl monomers having relatively low polarity include vinyl aromatic monomers such as styrene, methyl styrene, dimethyl styrene, ethyl styrene and isopropyl styrene; α-substituted styrenes such as α-methyl styrene and α-ethyl styrene; and vinyl cyanides such as acrylonitrile and methacrylonitrile. These can be used alone or in combination of two or more of the different kinds.

The weight average molecular weight of the vinyl polymer used for forming the vinyl polymer segment (b) is 1000 to 2,000,000 and preferably 5000 to 1,200,000 as determined by GPC (gel permeation chromatography) using styrene as standard. If the weight average molecular weight is less than 1000, heat resistance tends to decrease. On the other hand, if the weight average molecular weight exceeds 2,000,000, melt viscosity of the graft copolymer tends to increase while its moldability tends to decrease.

The melt flow rate (MFR) or melt index (MI) of the graft copolymer is preferably 0.01 to 500 g/10 minutes, more preferably 0.1 to 300 g/10 minutes and most preferably 1 to 200 g/10 minutes. MFR is measured under conditions of a resin temperature of 230°C and measuring load of 21 N (2.16 kgf) in compliance with the method defined in JIS 7210. If the MFR is less than 0.01 g/10 minutes or greater than 500 g/10 minutes, the resulting graft copolymer demonstrates poor compatibility with thermoplastic resin and the appearance of the molded product tends to be worsened, thereby making this undesirable.

In the case in which the particle diameter of the segment (a) or (b) that forms the dispersion phase of the graft copolymer is less than 0.01 µm or greater than 10 µm, the resulting graft copolymer is not adequately dispersed when blended into thermoplastic resin which tends to, for example, worsen the appearance or impair the stiffness of the thermoplastic resin.

The graft copolymer contains 5 to 99% by weight of the olefin polymer segment (a), and preferably 20 to 95% by weight of the olefin polymer segment (a). In other words, the graft copolymer contains 1 to 95% by weight of the vinyl polymer segment (b), and preferably 5 to 80% by weight of the vinyl polymer segment (b). If the amount of the olefin polymer segment (a) is less than 5% by weight, namely in the case the amount of the vinyl polymer segment (b) exceeds 95% by weight, the dispersivity of the graft copolymer in thermoplastic resins lowers, and the appearance of the molded product may be easily defaced. Conversely, in the case the amount of the olefin polymer segment (a) exceeds 99% by weight, namely in the case the amount of the vinyl polymer segment (b) is less than 1% by weight, modification of thermoplastic resins by the graft copolymer may be inadequate. The polarity of the graft copolymer is varied in accordance with the ratio of the olefin polymer segment (a) and the vinyl polymer segment (b). Accordingly, the interaction between the lubricant and the graft copolymer is adjusted by adjusting the ratio of the olefin polymer segment (a) and the vinyl polymer segment (b).

The graft copolymer can be produced by known grafting processes such as the chain transfer method and ionized radiation irradiation method. The most preferable production process is described below.

Namely, a liquid mixture is prepared containing 1 to 400 parts by weight of at least one of vinyl monomer, a radical polymerizable organic peroxide, which is a compound having a peroxide bond and a radical polymerizable function group within the same molecule, and a radical polymerization initiator. The radical polymerizable organic peroxide is, for example, a compound represented by chemical formula (A) or (B), and may be used alone or in combination. The radical polymerization initiator has a decomposition temperature of 40 to 90°C to obtain half-value period of 10 hours. The radical polymerizable organic peroxide is present at 20 parts by weight or less, and preferably 0.01 to 15 parts by weight, with respect to 100 parts by weight of vinyl monomer. The radical polymerization initiator is present at 0.01 to 8 parts by weight with respect to a total of 100 parts by weight of the vinyl monomer and the radical polymerizable organic peroxide.

Subsequently, 100 parts by weight of olefin polymer particles are suspended in water. The aforementioned liquid mixture is then added to prepare an aqueous suspension. The aqueous suspension is heated under conditions such that there is substantially no degradation of the radical polymerization initiator so that the vinyl monomer, the radical polymerizable organic peroxide and the radical polymerization initiator are immersed in the aforementioned particles of the polyolefin (co)polymer. The temperature of the aqueous suspension is then raised at the point where this immersion rate reaches 20% by weight or more, and preferably 30% by weight or more, of the added amount. As a result, the vinyl monomer and radical polymerizable organic peroxide are copolymerized within the olefinic resin particles allowing the obtaining of a graft precursor. A graft copolymer including the olefin polymer segment (a) and the vinyl polymer segment (b) is then obtained by mixing this graft precursor while melting at 100 to 300°C. The process is simple and yields high grafting efficiency, and since there is no occurrence of secondary aggregation caused by heat, performance is demonstrated more effectively. According to this process, a graft copolymer is obtained that mixes and interacts easily with the lubricant since aggregation of the vinyl polymer segment is prevented.

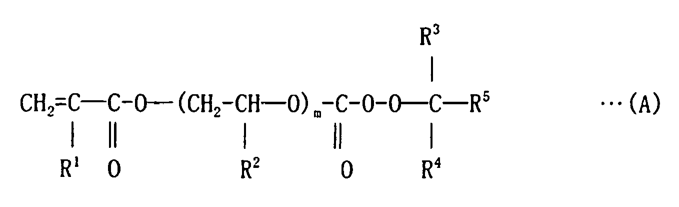

In formula (A), R¹ represents a hydrogen atom or an alkyl group having 1 to 2 carbon atoms, R² represents a hydrogen atom or a methyl group, R³ and R⁴ respectively represent an alkyl group having 1 to 4 carbon atoms, R⁵ represents an alkyl group having 1 to 12 carbon atoms, a phenyl group, an alkyl-substituted phenyl group or a cycloalkyl group having 3 to 12 carbon atoms, and m represents an integer of 1 or 2.

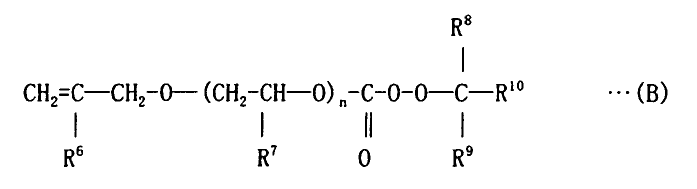

In formula (B), R⁶ represents a hydrogen atom or an alkyl group having 1 to 4 carbon atoms, R⁷ represents a hydrogen atom or a methyl group, R⁸ and R⁹ respectively represent an alkyl group having 1 to 4 carbon atoms, R¹⁰ represents an alkyl group having 1 to 12 carbon atoms, a phenyl group, an alkyl-substituted phenyl group or a cycloalkyl group having 3 to 12 carbon atoms, and n represents an integer of 0, 1 or 2.

Preferable examples of said radical polymerizable organic peroxide include t-butylperoxyacryloyloxy ethyl carbonate, t-butylperoxymethacryloyloxy ethyl carbonate, t-butylperoxy allyl carbonate and t-butylperoxy methacryl carbonate.

Although the olefin polymer segment (a) is normally the backbone component and the vinyl polymer segment (b) is normally the branch component in the graft copolymer obtained by the aforementioned production process, a graft copolymer may be obtained that has an H-shaped structure or irregular structure depending on the production conditions. Furthermore, a graft copolymer of the present invention can also be produced without using a radical polymerizable organic peroxide. In the case of not using a radical polymerizable organic peroxide, however, it is difficult to adjust the balance between affinity and counter-affinity (interaction) between the graft copolymer and the lubricant, thereby making it difficult to control the surface migration of the lubricant.

A graft copolymer composition of the present invention is obtained by mixing while melting a graft copolymer or its graft precursor and a lubricant. The abrasion resistance and scratching resistance in particular are improved in the case of a thermoplastic resin composition blended with this graft copolymer composition and in the case of a molded product of that thermoplastic resin composition. The moldability of the graft copolymer composition is improved by the lubricant.

The lubricant is at least one of fatty acid amides and an alkylene oxide derivative having superior interaction with the graft copolymer and capable of effectively demonstrating lubrication effects.

The fatty acid amide is formed from a fatty acid having 10 to 25 carbon atoms. The aforementioned effects cannot be adequately demonstrated with a fatty acid having less than 10 carbon atoms. In addition, fatty acids having more than 25 carbon atoms are difficult to acquire, thus making them impractical. Specific examples of fatty acid amides include saturated fatty acid amides such as lauric amide, palmitic amide, stearic amide and behenic amide, unsaturated fatty acid amides such as erucic amide, oleic amide, brassidic amide and elaidic amide, and bis-fatty acid amides such as methylene-bis-stearic amide, methylene-bis-oleic amide, ethylene-bis-stearic amide and ethylene-bis-oleic amide. These can be used alone or in combination of two or more of the different kinds. Among these, erucic amide, oleic amide and ethylene-bis-oleic amide are preferable, and among these oleic amide is the most preferable in consideration of its superior lubricity.

Specific examples of an alkylene oxide derivative include polyethylene glycols such as polyethylene glycol, polyethylene glycol monomethyl ether, polyethylene glycol glycerin ether and polyethylene glycol dimethyl ether, polypropylene glycols of diols and triols, bis phenol A derivatives such as polyethylene glycol bis phenol A ether, polyalkylene glycol derivatives such as poly(ethylene glycol tetramethylene glycol) and polyethylene glycol-polypropylene glycol, and allylated polyethers such as polyethylene glycol allyl ethers and methoxy polyethylene glycol allyl ethers. These can be used alone or in combination of two or more of the different kinds.

These alkylene oxide derivatives preferably have a weight average molecular weight of 100 to 100,000. If the weight average molecular weight is within the range of 100 to 100,000, suitable interaction with the graft copolymer is observed and surface migration of lubricant can be adjusted satisfactorily. Among these, polyethylene glycol, polyethylene glycol monomethyl ether and polypropylene glycol are preferable, and polyethylene glycol monomethyl ether is particularly preferable in consideration of demonstrating the best interaction with the graft copolymer and facilitating adjustment of surface migration of the lubricant.

The heating temperature when producing the graft copolymer composition is preferably 70 to 300°C. In the case the heating temperature is lower than 70°C, melting becomes incomplete and due to the high melt viscosity, mixing is inadequate thereby resulting in the appearance of phase and delamination, thus making this undesirable. In the case the heating temperature exceeds 300°C, degradation of the graft copolymer becomes excessive, thus making this undesirable.

The graft copolymer is preferably present at a ratio of 50 to 99% by weight in the graft copolymer composition. The ratio is more preferably 60 to 90% by weight. Thus, the ratio of the lubricant is preferably 1 to 50% by weight. The ratio of the lubricant is more preferably 10 to 40% by weight. If the amount of graft copolymer is less than 50% by weight, the surface migration of the graft copolymer composition decreases, while if the amount exceeds 99% by weight, desirable characteristics tend not to be demonstrated.

A thermoplastic resin composition of the present invention is composed of the graft copolymer composition and an olefin thermoplastic resin. The amount of the olefin thermo-plastic resin is preferably 50 to 99.5 parts by weight and the amount of the graft copolymer composition is preferably 0.5 to 50 parts by weight.

Examples of said olefin thermoplastic resin include olefin polymers, such as polypropylene and polyethylene, copolymers of ethylene and α-olefins having 3 carbon atoms or more, copolymers of α-olefin monomers and vinyl monomers, ethylene copolymer rubber and olefin elastomers, which serve as the raw material resin of said olefin polymer segment (a). General-purpose rubbers and general-purpose resins other than olefin thermoplastic resins may be blended therein as necessary.

Examples of said α-olefins having 3 or more carbon atoms include propylene, 1-butene, 1-pentene, 3-methyl-1-butene, 1-hexene, 1-decene, 3-methyl-1-pentene, 4-methyl-1-pentene, 1-octene and their mixtures. Other examples include ethylene-octene copolymers, ethylene-butadiene copolymers and ethylene-propylene copolymers.

Examples of said ethylene copolymer rubbers include ethylene-propylene copolymer rubber, ethylene-propylene-diene copolymer rubber and ethylene-octene copolymer rubber.

Examples of said copolymers of α-olefin monomers and vinyl monomers include ethylene-acrylate copolymer, ethylene-methyl acrylate copolymer, ethylene-ethyl acrylate copolymer, ethylene-isobutyl acrylate copolymer, ethylene-n-butyl acrylate copolymer, ethylene-2-ethylhexyl acrylate copolymer, ethylene-ethyl acrylate-maleic anhydride copolymer, ethylene-ethyl acrylate-glycidyl methacrylate copolymer, ethylene-glycidyl methacrylate copolymer and ethylene-vinyl acetate copolymer or their saponification products.

Examples of said olefin elastomers include commercially available elastomers such as Milastomer (trade name of Mitsui Chemicals, Inc.), Santoprene (AES Japan, trade name), Sumitomo TPE (trade name of Sumitomo Chemical Co., Ltd.) and Catalloy (trade name of SunAllomer Ltd.). Examples of said general-purpose rubbers include styrene elastomers such as styrene-butadiene rubber, styreneisoprene rubber and their hydrogenated products, diene rubbers such as nitrile rubber, natural rubber and butyl rubber (IIR), and polyisobutylene rubber. Examples of said general-purpose resins include polyester resins such as polyethylene terephthalate.. These olefin thermoplastic resins can be used alone or in combination of two or more of the different kinds.

The following provides an explanation of the production process of a thermoplastic resin composition of the present invention.

A thermoplastic resin composition is produced by melting and mixing a graft copolymer composition and an olefin thermoplastic resin at 120 to 250°C. If the temperature is lower than 120°C, melting is incomplete, melt viscosity is high and mixing will be inadequate thereby making this undesirable due to phase separation and delamination. On the other hand, if the temperature exceeds 250°C, the resin and the lubricant degrade thereby making this undesirable. Examples of said methods used for said melting and mixing the components include known methods, such as extrusion kneading and roll kneading.

A thermoplastic resin composition may also be produced by mixing a graft copolymer, a lubricant and an olefin thermoplastic resin all at once. In this case, the graft copolymer and the lubricant are converted to a graft copolymer composition within the olefin thermoplastic resin. Furthermore, in the case of melting and mixing a graft precursor and a lubricant, although there is the possibility that the graft copolymer may result from copolymerization of a portion of the graft precursor with the lubricant and the olefin thermoplastic resin, this does not present a problem.

Due to easy control of the surface migration of a lubricant (release control), a thermoplastic resin composition of the present invention can be obtained by premixing a graft copolymer composition with at least one of olefin thermoplastic resin followed by mixing with at least one of olefin thermoplastic resin. These olefin thermoplastic resins may be of different kinds.

The ratio of the graft copolymer composition in the thermoplastic resin composition is preferably 1 to 50% by weight, and more preferably 2 to 30% by weight. Thus, the ratio of the olefin thermoplastic resin in the thermoplastic resin composition is preferably 50 to 99% by weight, and more preferably 70 to 98% by weight. If the ratio of the graft copolymer composition is less than 1% by weight, the characteristics brought about by the graft copolymer are not adequately demonstrated. On the other hand, if the ratio of the graft copolymer composition exceeds 50% by weight, stiffness and the heat resistance of the resulting molding decrease, thereby making this undesirable.

The ratio of the lubricant in the thermoplastic resin composition is preferably 0.01 to 10% by weight, and more preferably 0.1 to 8% by weight. If the ratio of the lubricant is less than 0.01% by weight, the characteristics based on the lubricant are not adequately demonstrated. On the other hand, if the ratio of the lubricant exceeds 10% by weight, the lubricant bleeds easily on the surface resulting in a molded product susceptible to worsening of appearance, thereby making this undesirable. Furthermore, the moldability of the thermoplastic resin composition is improved by the lubricant.

A thermoplastic resin composition of the present invention can be used in various applications. Since a thermoplastic resin composition containing an olefin elastomer for the olefin thermoplastic resin in particular can be processed by an ordinary molding machine, it can be used for products having flexibility such as automobile parts, home appliance parts and consumer goods. Examples of said automobile parts include weather seals, glass run channels, side molded products, bumpers, mud flaps and other automobile exterior materials, instrument panels, door trim and other automobile interior materials and their coverings, and steering wheels, grips, air bag covers, console boxes and shift levers. Examples of said home appliance parts include wire coating materials and paper feed rollers.

A thermoplastic resin composition of the present invention may also contain, within the scope of the present invention, additives including a halogen-containing compound, such as halogenated styrene, a flame retardant, such as phosphorous compounds, a reinforcing filler, such as carbon fibers, mica and talc, an antioxidant, such as phenol-antioxidant, amine-antioxidant, thioether-antioxidant and phosphorous-antioxidant, a stabilizer, a dispersant, a foaming agent, a crosslinking agent, an ultraviolet absorber, a colorant and a mineral oil-based softener, as necessary.

A molded product having a predetermined shape is produced by molding a thermoplastic resin composition of the present invention with a known molding machine. Examples of molding methods include calendar processing, pneumatic processing, heat molding, blow molding, foam molding, extrusion molding, injection molding and vacuum molding. Examples of said molded products include sheets, films, heat molded products, hollow molded products, foams, injection molded products, molded products laminated with urethane-based thermoplastic elastomers and multilayer molded films gravure printed with urethane paint.

The present invention has the advantages described below.

The vinyl polymer segment (b) is a highly polar segment formed from at least one of vinyl monomer selected from the group consisting of (meth)acrylic acid, (meth)acrylic alkyl ester, glycidyl (meth)acrylate and hydroxyl group-containing vinyl monomers. On the other hand, the fatty acid amide or an alkylene oxide derivative used as a lubricant is also highly polar. Consequently, the lubricant is easily retained in the graft copolymer due to interaction based on the affinity between the lubricant and the graft copolymer. Thus, excessive bleeding of the lubricant from inside the graft copolymer to the surface can be prevented.

On the other hand, non-polar styrene is used for the vinyl monomer that is used for forming the vinyl polymer segment (b) of the graft copolymer, or a non-polar olefin polymer segment (a) is contained in the graft copolymer. Consequently, the lubricant easily migrates from inside the graft copolymer to the surface due to interaction based on the counter-affinity between the lubricant and graft copolymer. In this case, the lubricant migrates to the surface of the graft copolymer or to the vicinity thereof, and lubricity is demonstrated on the surface of the graft copolymer by this migrated lubricant. Thus, the surface migration of lubricant can be adjusted by changing the composition of the graft copolymer. Namely, migration of lubricant to the surface is inhibited by increasing the polarity of each segment of the graft copolymer, while migration of lubricant to the surface can be promoted by decreasing the polarity of each segment.

Since the glass transition temperature (Tg) of the graft copolymer increases as a result of increasing the polarity of the vinyl polymer segment (b), the surface migration of lubricant can be adjusted by using this glass transition temperature as an indicator.

The graft copolymer has a multi-phase structure. Fine particles having a diameter of 0.001 to 10 µm of one of the segments is dispersed in a matrix of the other segment. Since a lubricant is contained in the dispersion phase (fine particles), the contact surface area between the lubricant and segment inside the graft copolymer is large, and the lubricant suitably interacts with the graft copolymer.

Since the olefin polymer segment (a) in the graft copolymer and the olefin thermoplastic resin are identical, and the lubricant and the vinyl polymer segment (b) in the graft copolymer both have high polarity, the compatibility between the graft copolymer and the olefin thermoplastic resin is satisfactory. Thus, resistance to scratching, abrasion resistance, bending resistance and other mechanical properties of molded products of the thermoplastic resin composition are satisfactorily maintained.

Since the lubricant improves the fluidity of the graft copolymer composition or thermoplastic resin composition, the moldability of the graft copolymer composition of thermoplastic resin composition is improved.

Although the following provides an explanation of the present invention through its reference examples, examples and comparative examples, the present invention is not limited by these examples. The test methods used to measure physical properties in the reference examples, examples and comparative examples are described below.
(1) Melt Flow Rate (MFR): MFR was measured according to a method complying with JIS K 7210 using a melt indexer (Toyo Seiki Seisaku-Sho, Ltd.). The measuring temperature was 230°C and the load was 21 N (2.16 kgf) in Reference Examples 1 to 3, Examples 25 and 27 and Comparative Examples 5 and 12, 230°C and 98 N (10 kg) in Examples 1 to 24 and Comparative Examples 1 to 4, 9 to 11 and 13 to 16, and 190°C and 21 N (2.16 kgf) in Example 26, Comparative Examples 6 to 8 and Comparative Example 14.
(2) Hardness: Hardness was measured in compliance with JIS K 6301 in Examples 1 to 24 and Comparative Examples 1 to 4, 9 to 11 and 13 to 16, in compliance with JIS K 6758 in Examples 25 and 27 and Comparative Examples 5 and 12, and in compliance with JIS K 7215 in Example 26 and Comparative Examples 6 to 8.
(3) Bleeding: Square plate specimens having a thickness of 3 mm and measuring 90 mm on a side were molded from pellets using an injection molding machine (Tabata Industrial Machinery Co., Ltd.). The specimens were allowed to stand for 72 hours in an oven at 70°C followed by visual observation of whether or not the lubricant exuded (bled) to the surface (product appearance) and evaluating bleeding according to the evaluation criteria indicated below.
   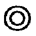 : No bleeding
   ○: Slight bleeding
   Δ: Bleeding
   ×: Extensive bleeding
(4) Abrasion Resistance: A load of 6.9 N (700 g) was placed on the same square plate specimens as those used in the bleeding test using an oscillating fastness frictional wear tester followed by causing abrasion of the specimens by rubbing back and forth with a No. 3 muslin cloth. The surfaces of the specimens were then observed visually and evaluated according to the evaluation criteria indicated below.
   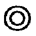 : Hardly any scratch marks
   ○: Somewhat conspicuous scratch marks
   Δ: Large, conspicuous scratch marks
   ×: Large, conspicuous scratch marks with large amounts of abrasion particles formed
(5) Scratching Resistance: Scratches were made in the same square plate specimens as those used in the bleeding test by applying a load of 0.5 N to a blade while rotating a turntable at a speed of 0.5 rpm by attaching the blade so that it was located at a distance of 3.5 cm from the center of rotation using a tapered scratch tester (Toyo Seiki Seisaku-Sho, Ltd.). The surfaces of the specimens were then observed and resistance to scratching was evaluated according to the evaluation criteria indicated below.
   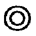 : Hardly any scratch marks
   ○: Somewhat conspicuous scratch marks
   Δ: Large, conspicuous scratch marks
   ×: Extremely conspicuous scratch marks
(6) Bending resistance: The same square plate specimens as those used in the bleeding test were bent back three times by 180 degrees. The degree of the presence of bending wrinkles in the surface was observed and bending resistance was evaluated according to the evaluation criteria indicated below.
   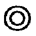 : Hardly any bending wrinkles
   ○: Small number of bending wrinkles
   Δ: Conspicuous bending wrinkles
   ×: Cracks present in the specimen

The abbreviations used in the following reference examples and tables represent the substances listed below.
TPO-1: Olefin elastomer (trade name: Milastomer 8030, Mitsui Chemicals, Inc.)
TPO-2: Olefin elastomer (trade name: Sumitomo TPE3885, Sumitomo Chemical Co., Ltd.)
TPO-3: Olefin elastomer (trade name: Milastomer 5030, Mitsui Chemicals, Inc.)
TPO-4: Olefin elastomer (trade name: Santoprene 201-87, AES Japan)
PE: Polyethylene (trade name: Sumikasen, Sumitomo Chemical Co., Ltd.)
PP: Polypropylene (trade name: SunAllomer PB671A, SunAllomer Ltd.)
EPR: Ethylene-propylene copolymer (trade name: EPO7P, JSR Corporation)
EEA: Ethylene-ethyl acrylate copolymer (trade name: Lexuron A4200, Nippon Polyolefin Kabushiki Kaisha)
EOR: Ethylene-octene copolymer (trade name: Engage 8100, Dupont-Dow Elastomers LLC)
MMA: Methyl methacrylate
MAA: Methacrylic acid
HPMA: 2-hydroxypropyl methacrylate
BA: Butyl acrylate
St: Styrene
AN: Acrylonitrile
GMA: Glycidyl methacrylate
OA: Oleic amide (trade name: Allflow E-10, NOF Corp.)
Sil-oil: Silicone oil (trade name: SH200-12500, Toray-Dow Corning Silicone Co., Ltd.)
MEG: Polyethylene glycol monomethyl ether (trade name: Uniox M-500, NOF Corp.)

### Reference Example 1 - Preparation of Graft Copolymer

2500 g of purified water was placed in a stainless steel autoclave having a volume of 5 liters followed by suspending 2.5 g of polyvinyl alcohol therein as a suspension agent. 700 g of EPR was then added and dispersed by stirring.

Separate from the above, 1.5 g of di-3,5,5-trimethylhexanoyl peroxide as a radical polymerization initiator and 9 g of t-butylperoxy methacryloyloxy ethyl carbonate as a radical polymerizable organic peroxide were dissolved in vinyl monomer mixture containing 100 g of St, 100 g of BA and 100 g of HPMA. The solution was then placed in an autoclave and stirred.

The radical polymerization initiator, the radical polymerizable organic peroxide and the vinyl monomer were immersed in the EPR by adjusting the temperature of the autoclave to 60 to 65°C and stirring for 3 hours. The total weight of the immersed vinyl monomer, the radical polymerizable organic peroxide and the radical polymerization initiator was confirmed to be 30% by weight or more of the amount added. The temperature of the autoclave was raised to 70 to 75°C followed by stirring at that temperature for 6 hours to complete polymerization. The product was then rinsed with water and dried to obtain a graft precursor.

A styrene-butyl acrylate-hydroxypropyl methacrylate copolymer was extracted from the graft precursor with tetrahydrofuran. The weight average molecular weight of the polymer was measured by GPC (in THF, using styrene as standard). The weight average molecular weight was 200,000.

The graft precursor was extruded at 180°C with a Labo Plastic Mill single-screw extruder (Toyo Seiki Seisaku-Sho, Ltd.) to undergo a grafting reaction and obtain a graft copolymer.

When the graft copolymer was observed with a scanning electron microscope (Hitachi), the graft copolymer was determined to be a multi-phase structured thermoplastic resin in which spherical resin particles having a particle diameter of 0.3 to 0.4 µm were uniformly dispersed. Furthermore, the grafting efficiency of the styrene-butyl acrylate-hydroxypropyl methacrylate copolymer was 55% by weight.

### Reference Example 2

2500 g of purified water were placed in a stainless steel autoclave having a volume of 5 liters followed by dissolving 2.5 g of polyvinyl alcohol therein as a suspension agent. 900 g of EOR were then added and dispersed by stirring.

Separate from the above, 0.5 g of benzoyl peroxide as a radical polymerization initiator and 3 g of t-butylperoxy methacryloyloxy ethyl carbonate as a radical polymerizable organic peroxide were dissolved in a vinyl monomer mixture containing 40 g of MMA, 20 g of BA and 40 g of MAA. The solution was then charged in an autoclave and stirred.

The radical polymerization initiator, radical polymerizable organic peroxide and vinyl monomer were immersed in PE by raising the temperature of the autoclave to 60 to 65°C and stirring for 2 hours. After confirming that the total weight of the immersed vinyl monomer, radical polymerizable organic peroxide and radical polymerization initiator was 30% by weight or more of the amount added, the temperature of the autoclave was raised to 80 to 85°C followed by stirring at that temperature for 5 hours to complete polymerization, and the product was then rinsed with water and dried to obtain a graft precursor.

A methyl methacrylate-butyl acrylate-methacrylate copolymer was extracted from the graft precursor with tetrahydrofuran. The weight average molecular weight of the polymer was measured by GPC (in THF, using styrene as standard). The weight average molecular weight was 800,000.

Next, the graft precursor was extruded at 200°C with a Labo PlastoMill single-screw extruder (Toyo Seiki Seisaku-Sho, Ltd.) to undergo a grafting reaction and obtain a graft copolymer.

When the graft copolymer was observed with a scanning electron microscope (Hitachi), the graft copolymer was determined to be a multi-phase structured thermoplastic resin in which spherical resin particles having a particle diameter of 0.2 to 0.3 µm were uniformly dispersed. Furthermore, the grafting efficiency of the methyl methacrylate-butyl acrylate-methacrylate copolymer was 90% by weight.

### Reference Example 3

Graft copolymers were obtained using the same procedure as Reference Example 1 by changing the components and ratios to those shown in Table 1.

**Table 1**

| Reference Example | 1 | 2 | 3 |
|---|---|---|---|
| Ingredients | EPR:St:BA:HPMA | EOR:MMA:MAA:BA | PP: St: AN: GMA |
| (parts by weight) | 70:10:10:10 | 90:4:2:4 | 50:30:10:10 |
| weight ave. MW of vinyl segment | 200000 | 800000 | 500000 |
| grafting efficiency (%) | 55 | 90 | 80 |
| dispersion particle diameter (µ m) | 0.3~0.4 | 0.2~0.3 | 0.3~0.4 |
| MFR (g/10 min) | 5 | 10 | 12 |

### Examples 1-10 - Preparation of Graft Copolymer Compositions and Thermoplastic Resin Compositions

After dry blending a graft precursor or graft copolymer, oleic amide or polyethylene glycol monomethyl ether as a lubricant, and EEA or EOR as an olefin thermoplastic resin in accordance with the components and ratios shown in Table 2, the blends were mixed and melted by means of a coaxial twin-screw extruder having a screw diameter of 30 mm, which is set to a cylinder temperature of 180°C, to obtain pellets of graft copolymer compositions and thermoplastic resin compositions. The results of testing the physical properties of the pellets are shown in Table 2.

### Examples 11-20 - Preparation of Thermoplastic Resin Compositions

The graft copolymer compositions, the thermoplastic resin compositions and olefin thermoplastic resins of Examples 1 to 13 were dry blended in accordance with the components and ratios shown in Table 3. The blends were mixed and melted by means of a coaxial twin-screw extruder having a screw diameter of 30 mm, which is set to a cylinder temperature of 180°C, to obtain pellets of thermoplastic resin compositions. The results of testing the physical properties of the pellets are shown in Table 3.

### Examples 21-24 - Preparation of Thermoplastic Resin Compositions

Pellets of thermoplastic resin compositions containing an olefin thermoplastic resin were obtained using the same procedure as Example 11 by multiple stages of melting and mixing the graft copolymers of the reference examples in accordance with the components and ratios shown in Table 4. The results of testing the physical properties of the pellets are shown in Table 4.

### Examples 25-27 - Preparation of Thermoplastic Resin Compositions

Pellets of thermoplastic resin compositions containing an olefin thermoplastic resin were obtained using the same procedure as Example 11 by multiple stages of melting and mixing by means of a coaxial twin-screw extruder having a screw diameter of 30 mm, which is set to a cylinder temperature of 200°C, in accordance with the components and ratios shown in Table 5. The results of testing the physical properties of the pellets are shown in Table 5.

### Comparative Examples 1-8

The physical properties of only the olefin thermoplastic resins used in the examples were tested. Those results are shown in Table 6.

### Comparative Examples 9-14

Compositions were prepared comprised of olefin thermoplastic resin compositions not containing a graft copolymer and lubricants in accordance with the components and ratios shown in Table 6, and pellets were obtained by melting and mixing those compositions. The results of testing the physical properties of the pellets are shown in Table 6.

### Reference Example 4

A graft copolymer was obtained in the same manner as Reference Example 1 using mPE as the olefin copolymer and St and AN as the vinyl monomers at the blended amounts shown in Table 7. The physical properties of the resulting graft copolymer are shown in Table 7.

### Comparative Examples 15 and 16 - Preparation of Thermoplastic Resin Compositions

Thermoplastic resin compositions were prepared comprised of olefin thermoplastic resin, graft copolymer and silicone oil lubricant using the compositions shown in Table 8, and pellets were obtained according to the same procedure as Example 11. The results of testing the physical properties of the pellets are shown in Table 8.

The following were determined as a result of comparing the aforementioned results.

The olefin thermoplastic resins of Comparative Examples 1 to 8 demonstrated inadequate abrasion resistance and scratching resistance. Although Comparative Examples 9 to 14 that used oleic amide, polyethylene glycol monomethyl ether and silicone oil demonstrated improved abrasion resistance and scratching resistance, surface migration of lubricant was unable to be controlled, and the results of the bleeding test were extremely poor. Thus, the appearance of the molded product was determined to be unable to be maintained over a long period of time.

In Comparative Example 15, silicone oil is used for the lubricant and the polarity of the graft copolymer is extremely low. In this case, bleeding occurred.

In Comparative Example 16, although the polarity of the graft copolymer composition is high, the lubricant is silicone oil. In this case, bleeding occurred.

Examples 1 to 27 that used a graft copolymer composition of the present invention demonstrated satisfactory abrasion resistance, scratching resistance and bleeding. Thus, the appearance of the molded product was found to be maintained over a long period of time. Examples 1 to 27 also demonstrated superior MFR values as compared with the comparative examples, and moldability and bending resistance were determined to be superior.

**Table 2**

| Examples | | 1 | 2 | 3 | 4 | 5 | 6 | 7 | 8 | 9 | 10 |
|---|---|---|---|---|---|---|---|---|---|---|---|
| Graft copolymer used (Reference Example number) | | 1 | 2 | 3 | - | - | 1 | - | - | 3 | 1 |
| Graft precursor used (Reference Example number) | | - | - | - | 1 | 2 | - | 1 | 2 | - | - |
| Amount of Graft copolymer or graft precursor (parts by weight) | | 80 | 60 | 90 | 60 | 10 | 30 | 10 | 85 | 70 | 10 |
| Amount of thermoplastic olefin resin | EEA(parts by weight) | - | - | - | - | 60 | 50 | - | - | - | 50 |
| | EOR(parts by weight) | - | - | - | - | - | - | 80 | - | 10 | - |
| Amount of OA (parts by weight) | | 20 | 40 | 10 | 40 | 30 | 20 | - | - | - | - |
| Amount of MEG (parts by weight) | | - | - | - | - | - | - | 10 | 15 | 20 | 40 |
| Bleeding | | Ⓞ | ○ | Ⓞ | ○ | Ⓞ | Ⓞor○ | Ⓞ | Ⓞor○ | Ⓞ | ○ |
| Abrasion Resistance | | Ⓞ | Ⓞ | Ⓞ | Ⓞ | Ⓞ | Ⓞ | Ⓞ | Ⓞ | Ⓞor | Ⓞ |
| Scratching Resistance | | Ⓞ | Ⓞ | Ⓞ | Ⓞ | Ⓞ | Ⓞ | Ⓞ | Ⓞ | Ⓞ | Ⓞ |
| Bending resistance | | Ⓞ | Ⓞ | Ⓞ | Ⓞ | Ⓞ | Ⓞ | Ⓞ | Ⓞ | Ⓞ | Ⓞ |
| MFR (g/10 min) | | 5 | 10 | 2 | 10 | 20 | 20 | 30 | 8 | 4 | 40 |
| Hardness | | 79 | 70 | 82 | 70 | 87 | 83 | 80 | 70 | 80 | 80 |

**Table 3**

| Examples | | | 11 | 12 | 13 | 14 | 15 | 16 | 17 | 18 | 19 | 20 |
|---|---|---|---|---|---|---|---|---|---|---|---|---|
| Amout of thermoplastic olefin resin | name | TPO-1 | 90 | - | - | - | - | 90 | - | - | - | - |
| | | TPO - 2 | - | 85 | - | - | 90 | - | 90 | - | - | - |
| | | TPO-3 | - | - | 70 | - | - | - | - | 70 | - | 80 |
| | | TPO-4 | - | - | - | 80 | - | - | - | - | 60 | - |
| Composition used (Example number) | | | 1 | 2 | 3 | 4 | 5 | 6 | 7 | 8 | 9 | 10 |
| Amount (parts by weight) | | | 10 | 15 | 30 | 20 | 10 | 10 | 10 | 30 | 20 | 20 |
| Bleeding | | | Ⓞ | ○ | Ⓞ | Ⓞor○ | Ⓞ | Ⓞor○ | Ⓞ | Ⓞor○ | Ⓞ | ○ |
| Abrasion Resistance | | | Ⓞ | Ⓞ | Ⓞ | Ⓞ | Ⓞ | Ⓞ | Ⓞ | Ⓞ | Ⓞor○ | Ⓞ |
| Scratching Resistance | | | Ⓞ | Ⓞ | Ⓞ | Ⓞ | Ⓞ | Ⓞ | Ⓞ | Ⓞ | Ⓞ | Ⓞ |
| Bending resistance | | | Ⓞ | Ⓞ | Ⓞ | Ⓞ | Ⓞ | Ⓞ | Ⓞ | Ⓞ | Ⓞ | Ⓞ |
| MFR (g/10 min) | | | 11 | 160 | 40 | 120 | 110 | 15 | 140 | 50 | 115 | 40 |
| Hardness | | | 85 | 85 | 65 | 90 | 87 | 85 | 85 | 65 | 90 | 66 |

**Table 4**

| Examples | | | 21 | 22 | 23 | 24 |
|---|---|---|---|---|---|---|
| Amout of thermoplastic olefin resin(oarts by weight) | name | TPO-1 | 90 | - | - | - |
| | | TPO-2 | - | 80 | - | |
| | | TPO-3 | - | - | 80 | 90 |
| | | EEA | 3 | 3 | 3 | |
| Graft copolymer used (Reference Example number) | | | 2 | - | 1 | 3 |
| Amount (parts by weight) | | | 5 | - | 10 | 10 |
| Composition used (Example number) | | | - | 1 | 3 | 8 |
| Amount (parts by weight) | | | - | 10 | 10 | 5 |
| Amount of OA (parts by weight) | | | 2 | - | - | - |
| Amount of MEG (parts by weight) | | | - | 7 | - | - |
| Bleeding | | | Ⓞ | Ⓞ | Ⓞ | Ⓞ |
| Abrasion Resistance | | | Ⓞ | Ⓞor○ | Ⓞor○ | Ⓞor○ |
| Scratching Resistance | | | Ⓞ | Ⓞor○ | Ⓞor○ | Ⓞor○ |
| Bending resistance | | | Ⓞ | Ⓞ | Ⓞ | Ⓞ |
| MFR (g/10 min) | | | 13 | 120 | 25 | 25 |
| Hardness | | | 85 | 85 | 68 | 68 |

**Table 5**

| Examples | | | 25 | 26 | 27 |
|---|---|---|---|---|---|
| Amout of thermoplastic olefin resin(parts by weight) | name | PP | 90 | - | 80 |
| | | PE | - | 80 | - |
| | | EEA | - | 10 | 5 |
| Graft copolymer used (Reference Example number) | | | 3 | 2 | 1 |
| Amount (parts by weight) | | | 8 | 8 | 12 |
| Amount of OA (parts by weight) | | | 2 | - | - |
| Amount of MEG (parts by weight) | | | - | 2 | - |
| Bleeding | | | Ⓞ | ○ | ○ |
| Abrasion Resistance | | | Ⓞ | Ⓞ | Ⓞ |
| Scratching Resistance | | | Ⓞ | Ⓞ | Ⓞ |
| MFR (g/10 min) | | | 9 | 5 | 9 |
| Hardness | | | 88 | 56 | 88 |

**Table 6**

| Comparative Examples | | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|
| Amout of thermoplastic olefin resin (parts by weight) | name | TPO -1 | 100 | - | - | - | - | - | - | - | 92 | - | - | - | - | 92 |
| | | TPO-2 | - | 100 | - | - | - | - | - | - | - | 98 | - | - | - | - |
| | | TPO-3 | - | - | 100 | - | - | - | - | - | - | - | 80 | - | - | - |
| | | TPO-4 | - | - | - | 100 | - | - | - | - | - | - | - | - | 95 | - |
| | | PP | - | - | - | - | 100 | - | - | - | - | - | - | 97 | - | - |
| | | PE | - | - | - | - | - | 100 | - | - | - | - | - | - | - | - |
| | | EEA | - | - | - | - | - | - | 100 | - | - | - | - | - | - | - |
| | | EOR | - | - | - | - | - | - | - | 100 | - | - | 15 | - | - | - |
| Amount of OA (parts by weight) | | | - | - | - | - | - | - | - | - | 8 | 2 | 5 | 3 | - | - |
| Amount of MEG (parts by weight) | | | - | - | - | - | - | - | - | - | - | - | - | - | 5 | 8 |
| Bleeding | | | Ⓞ | Ⓞ | Ⓞ | Ⓞ | Ⓞ | Ⓞ | Ⓞ | Ⓞ | × | Δ | × | × | Δ | × |
| Abrasion Resistance | | | × | × | × | Δ | ○ | ○ | × | × | Ⓞ | ○ | Ⓞ | Ⓞ | Ⓞ | Ⓞ |
| Scratching Resistance | | | Δ | Δ | Δ | ○ | ○ | ○ | × | × | Ⓞ | ○ | ○ | ○ | Δ | ○ |
| Bending resistance | | | Ⓞ | Ⓞ | Ⓞ | Ⓞ | - | - | Ⓞ | Ⓞ | ○ | Ⓞ | ○ | - | Δ | Δ |
| MFR (g/10 min) | | | 3 | 60 | 14 | 50 | 7 | 4 | 20 | 5 | 8 | 100 | 20 | 20 | 60 | 12 |
| Hardness | | | 85 | 85 | 46 | 91 | 90 | 57 | 95 | 75 | 85 | 65 | 55 | 88 | 90 | 85 |

**Table 7**

| Reference Example | 4 |
|---|---|
| Ingredients | mPE:St:AN |
| (Parts by weight) | 70:20:10 |
| weight ave. MW of vinyl segment | 200000 |
| grafting efficiency (%) | 70 |
| dispersion particle diameter (*µ* m) | 0.3~0.4 |
| MFR (g/10 min) | 10 |

**Table 8**

| Comparative Examples | | | 15 | 16 |
|---|---|---|---|---|
| Amout of thermoplastic olefin resin (parts by weight) | name | TPO-1 | 90 | - |
| | | TPO-2 | -- | 80 |
| | | EEA | - | 8 |
| graft copolymer (Reference example number) | | | - | 1 |
| amount (parts by weight) | | | - | 10 |
| graft copolymer (comparative example number) | | | 13 | - |
| amount (parts by weight) | | | | |
| amount of silicone oil (parts by weight) | | | 2 | 2 |
| Bleeding | | | × | Δ |
| Abrasion Resistance | | | ○ | ○ |
| Scratching Resistance | | | Δ | Δ |
| Bending resistance | | | O | O |
| MFR (g/10 min) | | | 13 | 120 |
| Hardness | | | 83 | 85 |

## Claims

1. A graft copolymer composition comprising:
a lubricant including at least one of fatty acid amides and an alkylene oxide derivative; and
a graft copolymer as the main component, the graft copolymer having a multi-phase structure in which particles of a first polymer segment are dispersed in a second polymer segment, with the diameter of the particles being 0.001 to 10 µm, wherein:
the first polymer segment is one of an olefin polymer segment (a) and a vinyl polymer segment (b), while the second polymer segment is the other one of the olefin polymer segment (a) and the vinyl polymer segment (b), and
the vinyl polymer segment (b) is formed from at least one of vinyl monomer selected from the group consisting of (meth)acrylic acid, (meth)acrylic alkyl ester, glycidyl (meth)acrylate and hydroxyl group-containing vinyl monomers, wherein the graft polymer contains 5 to 99% by weight of the olefin polymer segment (a) and 1 to 95% by weight of the vinyl polymer segment (10), and the radical polymerizable organic peroxide is present at 20 parts by weight or less.

2. The graft copolymer composition according to claim 1, wherein the amount of the lubricant is 1 to 50% by weight and the amount of the graft copolymer is 50 to 99% by weight.

3. The graft copolymer composition according to claim 1 or 2, wherein the graft copolymer is obtained by:
suspending an olefin polymer in water to prepare a suspension containing particles of the olefin polymer;
adding a solution containing a vinyl monomer, a radical polymerizable organic peroxide and a radical polymerization initiator to the suspension;
immersing the vinyl monomer, radical polymerizable organic peroxide and radical polymerization initiator in the particles of the olefin polymer;
copolymerizing the vinyl monomer and the radical polymerizable organic peroxide within the particles of the olefin polymer to synthesize a precursor; and
melting and mixing the precursor.

4. The graft copolymer composition according to claim 3, wherein the melting of the precursor is carried out at 100 to 300°C.

5. A thermoplastic resin composition comprising:
an olefin thermoplastic resin as the main components; and
a graft copolymer composition, wherein said graft copolymer composition contains:
a lubricant including at least one of fatty acid amides and an alkylene oxide derivative; and
a graft copolymer as the main component, the graft copolymer having a multi-phase structure in which particles of a first polymer segment are dispersed in a second polymer segment, with the diameter of the particles being 0.001 to 10 µm, wherein:
the first polymer segment is one of an olefin polymer segment (a) or a vinyl polymer segment (b), while the second polymer segment is the other one of the olefin polymer segment (a) and the vinyl polymer segment (b), and the vinyl polymer segment (b) is formed from at least one of vinyl monomer selected from the group consisting of (meth)acrylic acid, (meth)acrylic alkyl ester, glycidyl (meth)acrylate and hydroxyl group-containing vinyl monomers.

6. The thermoplastic resin composition according to claim 5, wherein the amount of the olefin thermoplastic resin is 50 to 99.5 parts by weight and the amount of the graft copolymer composition is 0.5 to 50 parts by weight.

7. The thermoplastic resin composition according to claim 5, wherein the amount of the lubricant is 1 to 50% by weight and the amount of the graft copolymer is 50 to 99% by weight.

8. A molding of a graft copolymer composition, wherein the graft copolymer composition contains:
a lubricant including at least one of fatty acid amides and an alkylene oxide derivative; and
a graft copolymer as the main component, the graft copolymer having a multi-phase structure in which particles of a first polymer segment are dispersed in a second polymer segment, with the diameter of the particles being 0.001 to 10 µm, wherein the first polymer segment is one of an olefin polymer segment (a) and a vinyl polymer segment (b), while the second polymer segment is the other one of the olefin polymer segment (a) and the vinyl polymer segment (b), and wherein the vinyl polymer segment (b) is formed from at least one of vinyl monomer selected from the group consisting of (meth)acrylic acid, (meth)acrylic alkyl ester, glycidyl (meth)acrylate and hydroxyl group-containing vinyl monomers.

9. The molding according to claim 8, wherein the amount of the lubricant is 1 to 50% by weight and the amount of the graft copolymer is 50 to 99% by weight.

10. A molding made from a thermoplastic resin composition, wherein the thermoplastic resin composition contains an olefin thermoplastic resin as the main component and a graft copolymer composition, wherein the graft copolymer composition contains:
a lubricant including at least one of fatty acid amides and an alkylene oxide derivative; and
a graft copolymer as the main component, the graft copolymer having a multi-phase structure in which particles of a first polymer segment are dispersed in a second polymer segment, with the diameter of the particles being 0.001 to 10 µm, wherein the first polymer segment is one of an olefin polymer segment (a) and a vinyl polymer segment (b), while the second polymer segment is the other one of the olefin polymer segment (a) and the vinyl polymer segment (b), and wherein the vinyl polymer segment (b) is formed from at least one of vinyl monomer selected from the group consisting of (meth)acrylic acid, (meth)acrylic alkyl ester, glycidyl (meth)acrylate and hydroxyl group-containing vinyl monomers.

11. The molding according to claim 10, wherein the amount of the olefin thermoplastic resin is 50 to 99.5 parts by weight and the amount of the graft copolymer composition is 0.5 to 50 parts by weight.

12. The molding according to claim 10, wherein the amount of the lubricant is 1 to 50% by weight and the amount of the graft copolymer is 50 to 99% by weight.

13. A process for producing a graft copolymer composition, the method comprising:
suspending an olefin polymer in water to prepare a suspension containing particles of the olefin polymer,
adding a solution containing a vinyl monomer, radical polymerizable organic peroxide and radical polymerization initiator to the suspension;
immersing the vinyl monomer, a radical polymerizable organic peroxide and a radical polymerization initiator in the particles of the olefin polymer;
copolymerizing the vinyl monomer and the radical polymerizable organic peroxide within the particles of the olefin polymer to synthesize a precursor; and
melting and mixing the precursor.

## Patentansprüche

1. Pfropfcopolymer-Zusammensetzung, die Folgendes umfasst:
ein Schmiermittel, das zumindest eines von Fettsäureamiden und einem Alkylenoxidderivat einschließt; und
ein Pfropfcopolymer als Hauptbestandteil, wobei das Pfropfcopolymer eine MultiPhasenstruktur aufweist, in der Teilchen eines ersten Polymersegmentes in einem zweiten Polymersegment dispergiert sind, wobei der Durchmesser der Teilchen 0,001 bis 10 µm beträgt, wobei:
das erste Polymersegment eines aus einem Olefinpolymersegment (a) und einem Vinylpolymersegment (b) ist, wohingegen das zweite Polymersegment das andere des Olefinpolymersegments (a) und des Vinylpolymersegments (b) ist, und
das Vinylpolymersegment (b) aus zumindest einem Vinylmonomer gebildet wird, ausgewählt aus der Gruppe, die aus (Meth)Acrylsäure, (Meth)Acrylsäurealkylester, Glycidyl(meth)acrylat und Hydroxylgrupppen-enthaltenden Vinylmonomeren ausgewählt ist, wobei das Pfropfpolymer 5 bis 99% Gew.-% des Olefinpolymersegments (a) und 1 bis 95 Gew.-% des Vinylpolymersegments (b) enthält und das radikalische polymerisierbare organische Peroxid zu 20 Gewichtsteilen oder weniger vorliegt.

2. Pfropfcopolymerzusammensetzung nach Anspruch 1, wobei die Menge des Schmiermittels 1 bis 50 Gew.-% beträgt und die Menge des Pfropfcopolymers 50 bis 99 Gew.-% beträgt.

3. Pfropfcopolymerzusammensetzung nach Anspruch 1 oder 2, wobei das Pfropfcopolymer durch Folgendes gewonnen wird:
Suspendieren eines Olefin-Polymers in Wasser zur Herstellung einer Suspension, die Teilchen des Olefinpolymers enthält;
Zusetzen einer Lösung, die ein Vinylmonomer enthält, eines radikalischen polymerisierbaren organischen Peroxids und eines radikalischen Polymerisationsstarters zur Suspension;
Eintauchen des Vinylmonomers, des radikalischen polymerisierbaren organischen Peroxids und des radikalischen Polymerisationsstarters in den Teilchen des Oletinpolymers;
Copolymerisieren des Vinylmonomers und des radikalischen polymerisierbaren organischen Peroxids innerhalb der Teilchen des Olefinpolymers zum Synthetisieren eines Vorläufers; und
Schmelzen und Vermischen des Vorläufers.

4. Pfropfcopolymerzusammensetzung nach Anspruch 3, wobei das Schmelzen des Vorläufers bei 100 bis 300°C durchgeführt wird.

5. Thermoplastische Harzzusammensetzung, die Folgendes umfasst:
ein olefinisches thermoplastisches Harz als Hauptbestandteile; und
eine Pfropfcopolymerzusammensetzung, wobei die Pfropfcopolymerzusammensetzung Folgendes enthält:
ein Schmiermittel, das zumindest eines von Fettsäureamiden und einem Alkylenoxidderivaten einschließt; und
ein Pfropfcopolymer als Hauptbestandteil, wobei das Pfropfcopolymer eine MultiPhasenstruktur aufweist, bei der Teilchen eines ersten Polymersegments in einem zweiten Polymersegment dispergiert sind, wobei der Durchmesser der Teilchen 0,01 bis 10 µm beträgt, wobei:
das erste Polymersegment eines von einem Olefinpolymersegment (a) oder einem Vinylpolymersegment (b) ist, wohingegen das zweite Polymersegment das andere des Olefinpolymersegments (a) und des Vinylpolymersegments (b) ist, und das Vinylpolymersegment (b) aus zumindest einem Vinylmonomer gebildet wird, ausgewählt aus der Gruppe, die aus (Meth)Acrylsäure, (Meth)Acrylsäurealkylester, Glycidyl(meth)acrylat und Hydroxylgruppen enthaltenden Vinylmonomeren besteht.

6. Thermoplastische Harzzusammensetzung nach Anspruch 5, wobei die Menge des thermoplastischen Olefinharzes 50 bis 99,5 Gewichtsteile beträgt und die Menge der Pfropfcopolymerzusammensetzung 0,5 bis 50 Gewichtsteile beträgt.

7. Thermoplastische Harzzusammensetzung nach Anspruch 5, wobei die Menge des Schmiermittels 1 bis 50 Gew.-% beträgt und die Menge des Pfropfcopolymers 50 bis 99 Gew.-% beträgt.

8. Formteil aus einer Pfropfcopolymerzusammensetzung, wobei die Pfropfcopolymerzusammensetzung Folgendes enthält:
ein Schmiermittel, das zumindest eines von Fettsäureamiden und einem Alkylenoxidderivat einschließt; und
ein Pfropfcopolymer als Hauptbestandteil, wobei das Pfropfcopolymer eine Multiphasenstruktur aufweist, in der Teilchen eines ersten Polymersegments in einem zweiten Polymersegment dispergiert sind, wobei der Durchmesser der Teilchen 0,001 bis 10 µm beträgt, wobei das erste Polymersegment eines aus einem Olefinpolymersegment (a) und einem Vinylpolymersegment (b) ist, während des zweite Polymersegment das andere des Olefinpolymersegments (a) und Vinylpolymersegments (b) ist, und wobei das Vinylpolymersegment (b) aus zumindest einem Vinylmonomer gebildet ist, ausgewählt aus der Gruppe, die aus (Meth)Acrylsäure, (Meth)Acrylsäurealkylester, Glycidyl(meth)acrylat und Hydroxylgruppen-enthaltenden Vinylmonomeren besteht.

9. Formteil gemäß Anspruch 8, wobei die Menge des Schmiermittels 1 bis 50 Gew.-% beträgt und die Menge des Pfropfcopolymers 50 bis 99 Gew.-% beträgt.

10. Formteil, das aus einer thermoplastischen Harzzusammensetzung hergestellt ist, wobei die thermoplastische Harzzusammensetzung ein thermoplastisches Olefinharz als Hauptbestandteil und eine Pfropfcopolymerzusammensetzung enthält, wobei die Pfropfcopolymerzusammensetzung Folgendes enthält:
ein Schmiermittel, das zumindest eines von Fettsäureamiden und einem Alkylenoxidderivat einschließt; und
ein Pfropfcopolymer als Hauptbestandteil, wobei das Pfropfcopolymer eine Multiphasenstruktur aufweist, in der Teilchen eines ersten Polymersegments in einem zweiten Polymersegment dispergiert sind, wobei der Durchmesser der Teilchen 0,001 bis 10 µm beträgt, wobei das erste Polymersegment eines von einem Olefinpolymersegment (a) und einem Vinylpolymersegment (b) ist, während das zweite Polymersegment das andere des Olefinpolymersegments (a) und des Vinylpolymersegments (b) ist, und wobei das Vinylpolymersegment (b) aus zumindest einem Vinylmonomer gebildet wird, ausgewählt aus der Gruppe, die aus (Meth)Acrylsäure, (Meth)Acrylsäurealkylester, Glycidyl(meth)acrylat und Hydroxylgruppen-enthaltende Vinylmonomeren ausgewählt ist.

11. Formteil nach Anspruch 10, wobei die Menge des thermoplastischen Olefinharzes 50 bis 99,5 Gewichtsteile beträgt und die Menge der Transplantatcopolymerzusammensetzung 0,5 bis 50 Gewichtsteile beträgt.

12. Formteil gemäß Anspruch 10, wobei die Menge des Schmiermittels 1 bis 50 Gew.-% beträgt und die Menge des Pfropfcopolymers 50 bis 99 Gew.-% beträgt.

13. Verfahren zur Herstellung einer Pfropfcopolymerzusammensetzung, wobei das Verfahren Folgendes umfasst:
Suspendieren eines Olefinpolymers in Wasser zur Herstellung einer Suspension, die Teilchen des Olefinpolymers enthält, Zusetzen einer Lösung, die ein Vinylmonomer, ein radikalisches polymerisierbares organisches Peroxid und einen radikalischen Polymerisationsstarter enthält, zur Suspension;
Eintauchen des Vinylmonomers, eines radikalischen polymerisierbaren organischen Peroxids und eines radikalischen Polymerisationsstarters in den Teilchen des Olefinpolymers; Copolymerisieren des Vinylmonomers und des radikalischen polymerisierbaren organischen Peroxids innerhalb der Teilchen des Olefinpolymers um einen Vorläufer zu synthetisieren; und
Schmelzen und Mischen des Vorläufers.

## Revendications

1. Composition de copolymère greffé comprenant :
un lubrifiant renfermant au moins un composé parmi des amides d'acides gras et un dérivé d'oxyde d'alkylène ; et
un copolymère greffé comme principal constituant, le copolymère greffé ayant une structure multi phasique dans laquelle des particules d'un premier segment polymère sont dispersées dans un deuxième segment polymère, le diamètre des particules étant de 0,001 à 10 µm, dans laquelle :
le premier segment polymère est choisi parmi un segment polymère oléfinique (a) et un segment polymère vinylique (b), tandis que le deuxième segment polymère est choisi à l'inverse parmi le segment polymère oléfinique (a) et le segment polymère vinylique (b), et
le segment polymère vinylique (b) est formé à partir d'au moins un monomère vinylique choisi dans le groupe constitué par l'acide (méth)acrylique, un ester alkylique d'acide (méth)acrylique, le (méth)acrylate de glycidyle et les monomères vinyliques contenant un groupe hydroxyle,
dans laquelle le polymère greffé contient 5 à 99% en poids du segment polymère oléfinique (a) et 1 à 95% en poids du segment polymère vinylique (b), et le peroxyde organique polymérisable par voie radicalaire est présent à raison de 20 parties en poids au maximum.

2. Composition de copolymère greffé selon la revendication 1, dans laquelle la quantité du lubrifiant est de 1 à 50% en poids et la quantité du copolymère greffé est de 50 à 99% en poids.

3. Composition de copolymère greffé selon la revendication 1 ou 2, dans laquelle le copolymère greffé est obtenu par :
mise en suspension d'un polymère oléfinique dans de l'eau pour préparer une suspension contenant des particules du polymère oléfinique ;
addition à la suspension d'une solution contenant un monomère vinylique, un peroxyde organique polymérisable par voie radicalaire et un amorceur de polymérisation radicalaire ;
immersion du monomère vinylique, du peroxyde organique polymérisable par voie radicalaire et de l'amorceur de polymérisation radicalaire dans les particules du polymère oléfinique ;
copolymérisation du monomère vinylique et du peroxyde organique polymérisable par voie radicalaire au sein des particules du polymère oléfinique pour synthétiser un précurseur ; et
fusion et mélange du précurseur.

4. Composition de copolymère greffé selon la revendication 3, dans laquelle la fusion du précurseur est réalisée à une température de 100 à 300°C.

5. Composition de résine thermoplastique comprenant :
une résine thermoplastique oléfinique comme principal constituant ; et
une composition de copolymère greffé, ladite composition de copolymère greffé contenant :
un lubrifiant renfermant au moins un composé parmi des amides d'acides gras et un dérivé d'oxyde d'alkylène ; et
un copolymère greffé comme principal constituant, le copolymère greffé ayant une structure multi phasique dans laquelle des particules d'un premier segment polymère sont dispersées dans un deuxième segment polymère, le diamètre des particules étant de 0,001 à 10 µm, dans laquelle :
le premier segment polymère est choisi parmi un segment polymère oléfinique (a) ou un segment polymère vinylique (b), tandis que le deuxième segment polymère est choisi à l'inverse parmi le segment polymère oléfinique (a) et le segment polymère vinylique (b), et le segment polymère vinylique (b) est formé à partir d'au moins un monomère vinylique choisi dans le groupe constitué par l'acide (méth)acrylique, un ester alkylique d'acide (méth)acrylique, le (méth)acrylate de glycidyle et les monomères vinyliques contenant un groupe hydroxyle.

6. Composition de résine thermoplastique selon la revendication 5, dans laquelle la quantité de la résine thermoplastique oléfinique est de 50 à 99,5 parts en poids et la quantité de la composition de copolymère greffé est de 0,5 à 50 parts en poids.

7. Composition de résine thermoplastique selon la revendication 5, dans laquelle la quantité du lubrifiant est de 1 à 50% en poids et la quantité du copolymère greffé est de 50 à 99% en poids.

8. Moulage d'une composition de copolymère greffé, dans lequel la composition de copolymère greffé contient :
un lubrifiant renfermant au moins un composé parmi des amides d'acides gras et un dérivé d'oxyde d'alkylène ; et
un copolymère greffé comme principal constituant, le copolymère greffé ayant une structure multi phasique dans laquelle des particules d'un premier segment polymère sont dispersées dans un deuxième segment polymère, le diamètre des particules étant de 0,001 à 10 µm, dans lequel le premier segment polymère est choisi parmi un segment polymère oléfinique (a) et un segment polymère vinylique (b), tandis que le deuxième segment polymère est choisi à l'inverse parmi le segment polymère oléfinique (a) et le segment polymère vinylique (b), et dans lequel le segment polymère vinylique (b) est formé d'au moins un monomère vinylique choisi dans le groupe constitué par l'acide (méth)acrylique, un ester alkylique d'acide (méth)acrylique, le (méth)acrylate de glycidyle et les monomères vinyliques contenant un groupe hydroxyle.

9. Moulage selon la revendication 8, dans lequel la quantité du lubrifiant est de 1 à 50% en poids et la quantité du copolymère greffé est de 50 à 99% en poids.

10. Moulage fait d'une composition de résine thermoplastique, dans lequel la composition de résine thermoplastique contient une résine thermoplastique oléfinique comme principal constituant et une composition de copolymère greffé, dans lequel la composition de copolymère greffé contient :
un lubrifiant renfermant au moins un composé parmi des amides d'acides gras et un dérivé d'oxyde d'alkylène ; et
un copolymère greffé comme principal constituant, le copolymère greffé ayant une structure multi phasique dans laquelle des particules d'un premier segment polymère sont dispersées dans un deuxième segment polymère, le diamètre des particules étant de 0,001 à 10 µm, dans lequel le premier segment polymère est choisi parmi un segment polymère oléfinique (a) et un segment polymère vinylique (b), tandis que le deuxième segment polymère est choisi à l'inverse parmi le segment polymère oléfinique (a) et le segment polymère vinylique (b), et dans lequel le segment polymère vinylique (b) est formé d'au moins un monomère vinylique choisi dans le groupe constitué par l'acide (méth)acrylique, un ester alkylique d'acide (méth)acrylique, le (méth)acrylate de glycidyle et les monomères vinyliques contenant un groupe hydroxyle.

11. Moulage selon la revendication 10, dans lequel la quantité de la résine thermoplastique oléfinique est de 50 à 99,5 parties en poids et la quantité de la composition de copolymère greffé est de 0,5 à 50 parties en poids.

12. Moulage selon la revendication 10, dans lequel la quantité du lubrifiant est de 1 à 50% en poids et la quantité du copolymère greffé est de 50 à 99% en poids.

13. Procédé de production d'une composition de copolymère greffé, le procédé comprenant :
la mise en suspension d'un polymère oléfinique dans de l'eau pour préparer une suspension contenant des particules du polymère oléfinique,
l'addition à la suspension d'une solution contenant un monomère vinylique, un peroxyde organique polymérisable par voie radicalaire et un amorceur de polymérisation radicalaire ;
l'immersion du monomère vinylique, d'un peroxyde organique polymérisable par voie radicalaire et d'un amorceur de polymérisation radicalaire dans les particules du polymère oléfinique ;
la copolymérisation du monomère vinylique et du peroxyde organique polymérisable par voie radicalaire au sein des particules du polymère oléfinique pour synthétiser un précurseur ; et
la fusion et le mélange du précurseur.
